# EUROPÄISCHE PATENTSCHRIFT

(11) **EP 1 144 276 B1**
(45) Veröffentlichungstag und Bekanntmachung des Hinweises auf die Patenterteilung: **16.04.2003**
(21) Anmeldenummer: 00902571.9
(22) Anmeldetag: 07.01.2000
(51) Int. Cl.: B65F 1/04, C05F 17/02

(54) **SAMMELBEHÄLTER FÜR DIE ERFASSUNG VON BIOWERTSTOFFEN**
BIN FOR COLLECTING VALUABLE BIOLOGICAL MATERIALS
COLLECTEUR DESTINE A RECEVOIR DES MATIERES BIOLOGIQUES REVALORISABLES

(30) Priorität: 18.01.1999 DE 29900626 U
(43) Veröffentlichungstag der Anmeldung: 17.10.2001
(73) Patentinhaber: Jäger, Georg, 82319 Starnberg (DE)
(72) Erfinder: Jäger, Georg, 82319 Starnberg (DE)
(74) Vertreter: Grättinger & Partner (GbR)
(86) Internationale Anmeldenummer: EP0000081
(87) Internationale Veröffentlichungsnummer: WO00041953

(56) Entgegenhaltungen:
- EP-A- 0 502 365
- WO-A-95/01294
- DE-C- 3 517 262
- DE-U- 29 703 055
- US-A- 5 031 796

## Beschreibung

Die vorliegende Erfindung betrifft einen Sammelbehälter für die Erfassung von Biowertstoffen, umfassend ein einen Boden, Seitenwände und einen öffenbaren Deckel aufweisendes Gefäß, das zumindest über eine Luftdurchtrittsöffnung verfügt.

Vor dem Hintergrund der Erkenntnis, daß die Ressourcen für Rohstoffe wie auch der Deponierraum für Abfallstoffe begrenzt sind, haben in den zurückliegenden Jahren Aspekte der Kreislaufbewirtschaftung Eingang in die Abfallentsorgung gefunden. Ein Aspekt hiervon ist die getrennte Erfassung von organischen Abfällen wie insbesondere Küchen- und Gartenabfällen, um diese in Kompostieranlagen in Kompost umzusetzen, der als Bodenverbesserungsmittel in Landwirt- und Gartenwirtschaft sowie Landschafts- und Gartenbau eingesetzt wird.

Die getrennte Erfassung von Biowertstoffen einerseits und Restmüll andererseits, zum Teil noch gekoppelt mit einer gesonderten Erfassung industriell recyclebarer Materialien wie Kunststoff, Glas, Metall und/oder Papier ist häufig mit einer erheblichen Erhöhung der Entsorgungsgebühren verbunden. Von maßgeblichem Einfluß sind dabei weniger die Kosten für die Behandlung der Biowertstoffe in der Kompostieranlage, denn diese werden mehr oder weniger durch die beim Verkauf des fertigen Komposts erzielten Erlöse gedeckt; ausschlaggebend für die Mehrkosten ist der Erfassung- und Transportaufwand. In diesem Zusammenhang ist von grundlegender Bedeutung, daß - zumal in warmen Regionen und/oder in den Sommermonaten - aus hygienischen Gründen Leerungsintervalle von einer Woche oder zum Teil noch erheblich weniger erforderlich sind. Dies gilt namentlich bei Verwendung konventioneller Abfalltonnen für die Erfassung von Biowertstoffen, da in den (geschlossenen) Abfalltonnen insbesondere in nassen Küchenabfällen unter Hitze und Luftabschluß anaerobe Zersetzungsprozesse ablaufen, die mit z. T. ekelerregenden Geruchsemissionen und gesundheitsgefährdenden Pilz-, Keim- und Sporenemissionen einhergehen. Zudem herrscht in den zur Erfassung von Biowertstoffen eingesetzten geschlossenen Abfalltonnen ein Klima, in dem sich Ungeziefer besonders gut vermehren kann.

Um das Auftreten anaerober Prozesse in den gesammelten Biowertstoffen zu unterdrücken, wurden bereits konventionelle Abfalltonnen mit - insbesondere in den Seitenwänden und/oder im Deckel angeordneten - Luftdurchtrittsöffnungen versehen. Zum Teil wurden solche mit Luftdurchtrittsöffnungen versehenen Tonnen darüber hinaus im Bereich der Innenflächen der Seitenwände mit Rippen ausgerüstet, durch welche ein Anlegen der Biowertstoffe an die Luftdurchtrittsöffnungen verhindert und auf diese Weise die Belüftung verbessert werden sollte (vgl. z.B. US 5 031 796 A). Ein klappbarer Bodenrost ist dabei an der Rückwand des Gefäßes befestigt. Im Ergebnis erweisen sich jedoch diese bekannten Sammelbehälter kaum als besser als herkömmliche geschlossene Sammelbehälter ohne Luftdurchtrittsöffnungen. Denn relativ nasse, kleinformatige und glatte Küchenabfälle wie Kartoffelschalen und dgl. neigen dazu, zwischen den Rippen an den Innenflächen der Seitenwände der Tonne anzuhaften und auf diese Weise die Luftdurchtrittsöffnungen zu verlegen. Als Folge hiervon laufen in den gesammelten Biowertstoffen dieselben anaeroben Fäulnis- und Gärungsprozesse ab, wie sie auch in geschlossenen Abfalltonnen ohne Luftdurchtrittsöffnungen ablaufen. Auch bei Einsatz dieser bekannten Sammelbehälter sind somit insbesondere in heißen Regionen und/oder Monaten kostenintensive Leerungspläne mit kurzen Leerungsintervallen von einer Woche oder weniger unvermeidbar, um den hygienischen Anforderungen zu genügen.

Weitere Vorschläge, herkömmliche Abfalltonnen durch Belüftungseinsätze dergestalt umzurüsten, daß sie sich zur Erfassung von kompostierbaren Abfällen besonders eignen, sind der DE 35 17 262 C1, der WO95/01294, der DE 297 03 055 U1 und der EP 0 502 365 A1 entnehmbar. So wird in der DE 35 17 262 C1 vorgeschlagen, in einen herkömmlichen zur Abfallerfassung eingesetzten Standardbehälter einen Siebeinsatz in Form eines Korbes einzusetzen, wobei die Wände des Siebeinsatzes einen Abstand zu den Seitenwänden des Abfallbehälters einhalten, um in Verbindung mit den in den Seitenwänden des Abfallbehälters vorgesehenen Luftdurchtrittsöffnungen eine Belüftung des in dem Siebeinsatz aufgenommenen kompostierbaren Abfalls zu bewirken. Auch die WO95/01294 offenbart eine entsprechende Kombination aus einem herkömmlichen Abfallbehälter und einem darin aufgenommenen korbartigen Siebeinsatz; allerdings wird hier ergänzend vorgeschlagen, in dem korbartigen Siebeinsatz einen gewebten oder perforierten Stützsack und in diesem wiederum einen Papiersack aufzunehmen, wobei zum Entleeren der Papiersack geschlossen wird, so daß er leicht aus dem Stützsack herausgleitet.

Die DE 297 03 055 U1 offenbart verschiedene Varianten von zur Erfassung von kompostierbaren Abfällen eingerichteten Sammelbehältern, bei denen jeweils mindestens ein Belüftungsrost vorgesehen ist. Offenbart werden die Möglichkeiten, einer Seitenwand einen Belüftungsrost zuzuordnen oder aber zwei einander benachbarten Eckbereichen zur Bildung von Belüftungsschächten jeweils einen ebenen oder einen abgewinkelten Belüftungsrost zuzuordnen.

Die EP 0 502 365 A1 offenbart einen Abfallsammelbehälter für kompostierbare Abfälle, bei dem durch ein mit Abstand zur Rückwand des Gefäßes angeordnetes profiliertes Entlüftungselement ein Lüftungsbereich definiert wird. Ergänzend ist ein schwenkbarer Bodenrost vorgesehen, der an dem Entlüftungselement gelagert ist.

Diesen Vorschlägen haftet gemeinsam als Nachteil an, daß sich mit den betreffenden Sammelbehältern nicht die angestrebte, kostengünstige Erfassung von Biowertstoffen erreichen läßt. So ist zum Teil der mit der Herstellung der Sammelbehälter verbundene finanzielle Aufwand recht hoch. Ferner laufen in den bekannten Sammelbehältern zum Teil bei ungünstigen Umständen (s.o.) anaerobe Vergärungsprozesse ab, die aus Gründen der Hygiene eine kostenintensive Leerung mit kurzen Leerungsintervallen erfordern. Auch ein allzu kleines verbleibendes Nutzvolumen erfordert kurze Leerungszyklen, woraus sich hohe Erfassungskosten ergeben.

Hieraus leitet sich die der vorliegenden Erfindung zugrundeliegende Aufgabenstellung ab, die darin besteht, einen Sammelbehälter der eingangs genannten Art zu schaffen, der eine kostengünstige Erfassung von Biowertstoffen ermöglicht.

Gemäß der vorliegenden Erfindung wird diese Aufgabe dadurch gelöst, daß im Inneren des Gefäßes zwei einander gegenüberliegende Seitenroste vorgesehen sind, die mit Abstand zu den zugeordneten Seitenwänden angeordnet sind, wobei die zwischen den Seitenrosten und den jeweiligen benachbarten Seitenwänden bestehenden Zwischenräume mit der mindestens einen Luftdurchtrittsöffnung in Verbindung stehen. Ferner ist ein Bodenrost vorgesehen, der mit Abstand zum Boden des Gefäßes angeordnet ist. Der Bodenrost ist dabei schwenkbar gelagert, und zwar an den beiden einander gegenüberliegenden Seitenrosten.

Die erfindungsgemäßen Sammelbehälter zeichnen sich mit anderen Worten dadurch aus, daß zumindest einem Teil der Seitenwände ein hinterlüfteter Seitenrost zugeordnet ist. Dabei kann jeder der Seitenwände des Gefäßes ein Seitenrost zugeordnet sein; im Rahmen der vorliegenden Erfindung können jedoch auch nur einem Teil der Seitenwände Seitenroste zugeordnet sein.

Der Raum zwischen dem Boden des Gefäßes und dem Bodenrost bildet einen Sickerwasserspeicher, in welchem überschüssiges Wasser von tropfnaß in den Sammelbehälter eingefüllten Biowertstoffen aufgefangen wird. Ein solches Flüssigkeitsreservoir ist besonders günstig für das sich in dem Sammelbehälter entwickelnde Kleinklima. Die Flüssigkeit in dem Sickerwasserspeicher verhindert nämlich ein allzu trockenes Kleinklima in dem Sammelbehälter, wobei zugleich einer Fäulnisbildung vorgebeugt wird, wie sie bei herkömmlichen Abfalltonnen im Bereich der im Sickerwasser liegenden Biowertstoffe auftritt.

Die beschriebene schwenkbare Aufhängung des Bodenrostes dient insbesondere dem Zweck, daß durch den Bodenrost hindurchgefallene kleinformatige Biowertstoffe beim Entleeren des Sammelbehälters mit entleert werden. Denn wenn der Sammelbehälter zu seiner Entleerung auf den Kopf gestellt wird, klappt der verschwenkbar gelagerte Bodenrost in das Innere des Sammelbehälters hinein, so daß in dem Sickerwasserspeicher vorhandene kleinformatige Biowertstoffe ungehindert aus dem Sammelbehälter herausfallen. Dies führt zu einer Selbstreinigung des Sammelbehälters, so daß auf die beim Stand der Technik erforderliche regelmäßige Reinigung verzichtet werden kann.

Ein unter Kostengesichtspunkten besonders bedeutsamer Vorteil der vorliegenden Erfindung ist darin zu sehen, daß die Seitenroste Teil eines Einsatzes sein können, der in eine handelsübliche Tonne, die ggf. bereits über Luftdurchtrittsöffnungen verfügen kann, oder ein sonstiges handelsübliches Gefäß (z. B. 1,1 m³-Wagen) eingebaut ist. In diesem Sinne können die Seitenroste insbesondere über Befestigungselemente gehalten sein, welche innen an den Seitenwänden des Gefäßes angebracht sind und zugleich die Funktion von Abstandshaltern erfüllen. Beispielsweise kann dabei ein Set, der der Umrüstung einer handelsüblichen Abfalltonne in einen erfindungsgemäßen Sammelbehälter dient, vier Befestigungsschienen und/oder eine Mehrzahl zwischen Seitenrosten und Seitenwänden anzuordnenden Distanzstücken und zwei Seitenroste sowie ggf. einen Bodenrost (siehe unten) umfassen; die Befestigungsschienen und/oder Distanzstücke werden innen an den Seitenwänden der Tonne befestigt (z. B. angeclipst oder angeschraubt), und anschließend werden die Seitenroste in die Befestigungsschienen eingesetzt bzw. auf die Distanzstücke aufgesetzt und gegen Herausfallen gesichert.

Durch die vorliegende Erfindung ist eine hervorragende Durchlüftung der in dem Sammelbehälter angesammelten Biowertstoffe sichergestellt. Hierzu trägt u. a. bei, daß die gesammelten Biowertstoffe durch die Seitenroste von den betreffenden Seitenwänden des Gefäßes ferngehalten werden. Auf diese Weise ist ausgeschlossen, daß in den Seitenwänden angeordnete Luftdurchtrittsöffnungen durch Biowertstoffe verlegt, verstopft und/oder verklebt werden. Die Perforation der Seitenroste stellt eine großflächige Belüftung der gesammelten Biowertstoffe sicher, die ohne die erfindungsgemäß vorgesehenen Seitenroste nicht möglich wäre; denn eine großflächige Perforation der Seitenwände ohne Seitenroste würde zu einem Austreten der Biowertstoffe aus dem Sammelbehälter führen.

Die mit der vorliegenden Erfindung verbundenen Vorteile lassen sich wie folgt zusammenfassen: Die gute Durchlüftung der gesammelten Biowertstoffe schließt aus, daß in dem Sammelbehälter anaerobe Prozesse ablaufen. Vielmehr beginnt in den gesammelten Biowertstoffen bereits eine aerobe Verrottung. Die beim Stand der Technik auftretenden lästigen und/oder gesundheitsschädlichen Emissionen werden auf diese Weise auf ein praktisch nicht mehr relevantes Maß reduziert. Als Folge hiervon lassen sich bei Verwendung des erfindungsgemäßen Sammelbehälters auch in warmen Regionen und/oder in den Sommermonaten wirtschaftlich lange Leerungszyklen von acht Wochen oder sogar mehr bzw. nur vom Erreichen der Füllkapazität abhängige Leerungszeiten einhalten. Anders als bei Verwendung bekannter gattungsgemäßer Sammelbehälter besteht somit keine Notwendigkeit mehr, allein aus Gründen der Hygiene nur zu einem Bruchteil gefüllte Sammelbehälter zu entleeren. Die mit der Erfassung der Biowertstoffe verbundenen Kosten lassen sich auf diese Weise drastisch reduzieren. Zudem führen die in dem erfindungsgemäßen Sammelbehälter ablaufenden aeroben Prozesse zu einer Vorrotte der gesammelten Biowertstoffe. Dies begünstigt und beschleunigt nicht nur die nachfolgende Verrottung in der Kompostieranlage. Auch wird durch die in dem Sammelbehälter stattfindende Vorverrottung das Gewicht der gesammelten Biowertstoffe maßgeblich reduziert, und die gesammelten Biowertstoffe setzen sich bzw. sacken zusammen. Auf diese Weise kann der Sammelbehälter in dem Zeitraum bis zur nächsten Leerung mehr Biowertstoffe aufnehmen als ohne die durch die Erfindung erreichte Vorrotte, wobei das durch die eingebauten Seitenroste reduzierte Nutzvolumen des Gefäßes durch die während der Vorrottung ablaufenden Setzungen der gesammelten Biowertstoffe bei weitem aufgewogen wird. Trotz des reduzierten Nutzvolumens lassen sich mit dem erfindungsgemäßen Sammelbehälter somit innerhalb des entsprechend gestreckten Leerungsintervalls mehr Biowertstoffe sammeln als mit bekannten gattungsgemäßen Sammelbehältern gleicher Außenabmessungen. Und das Abfallsammelfahrzeug, in das die Sammelbehälter hinein entleert werden, fährt weniger überflüssiges Wasser mit sich herum.

Als mittelbare Wirkungen der vorliegenden Erfindung stellt sich - infolge der reduzierten Emissionen - eine gesteigerte Akzeptanz der Biowertstoffsammlung ein.

Die vorliegende Erfindung eignet sich in gleicher Weise dazu, in Verbindung mit Tonnen wie auch mit sonstigen Gefäßen (z. B. 1,1 m³-Wagen) realisiert zu werden.

Gemäß einer ersten bevorzugten Weiterbildung der Erfindung ist die mindestens eine Luftdurchtrittsöffnung des Gefäßes in dessen Seitenwand angeordnet. Bei erfindungsgemäßen Sammelbehältern, die für den Einsatz in gemäßigten Zonen bestimmt sind, sind besonders bevorzugt zwei Luftdurchtrittsöffnungen vorgesehen, die in einander gegenüberliegenden Seitenwänden des Gefäßes angeordnet sind. Auf diese Weise ergeben sich besonders günstige Luftaustauschverhältnisse, die eine effiziente Vorrotte begünstigen. Die Luftdurchtrittsöffnungen können dabei insbesondere als Ausnehmungen in der Seitenwand, in die ein Insektenfilter (Fliegengitter) eingesetzt ist, ausgebildet sein.

Die im Rahmen der vorliegenden Erfindung einzusetzenden Seitenroste können durchaus eine relativ großformatige Perforation aufweisen, was den Luftaustausch und somit den Rotteprozeß innerhalb des Sammelbehälters begünstigt. Denn sofern kleinformatige Biowertstoffe durch die Seitenroste hindurchfallen, gelangen sie in den zwischen dem betreffenden Seitenrost und der zugeordneten Seitenwand des Gefäßes bestehenden Hohlraum. Bei dem normalen Entleerungsprozeß des Sammelbehälters werden auch diese kleinformatigen Biowertstoffe in das Sammelfahrzeug hinein entleert. Als besonders günstig hat sich erwiesen, wenn die Perforation der Seitenroste vertikale Schlitze umfaßt. Diese sind in mehreren Reihen, besonders bevorzugt versetzt zueinander angeordnet.

An den weiter oben beschriebenen Sickerwasserspeicher kann ein Ablauf angeschlossen sein. Dieser kann in Form eines Überlaufs ausgeführt sein, der verhindert, daß der Flüssigkeitsspiegel des Sickerwassers über den Bodenrost ansteigt. Der Ablauf kann jedoch auch der gezielten Entnahme von Sickerwasser dienen, das sich zur Herstellung einer flüssigen Bodennahrung eignet.

Hinsichtlich der Anzahl der Seitenroste unterliegt die vorliegende Erfindung keinen Beschränkungen. So können bei Sammelbehältern, deren Gefäße vier Seitenwände aufweisen, vier Seitenroste vorgesehen sein. Für günstige Verhältnisse innerhalb des Sammelbehälters genügen jedoch in aller Regel bereits zwei Seitenroste, die einander gegenüberliegend angeordnet sind. In diesem Falle weist der Sammelbehälter ein größeres Fassungsvermögen auf als im Falle der Verwendung von vier Seitenrosten. Beispielsweise können auch drei Seitenroste vorgesehen sein.

Im Folgenden wird ein bevorzugtes Ausführungsbeispiel des erfindungsgemäßen Sammelbehälters unter Bezugnahme auf die anliegende Zeichnung näher erläutert.

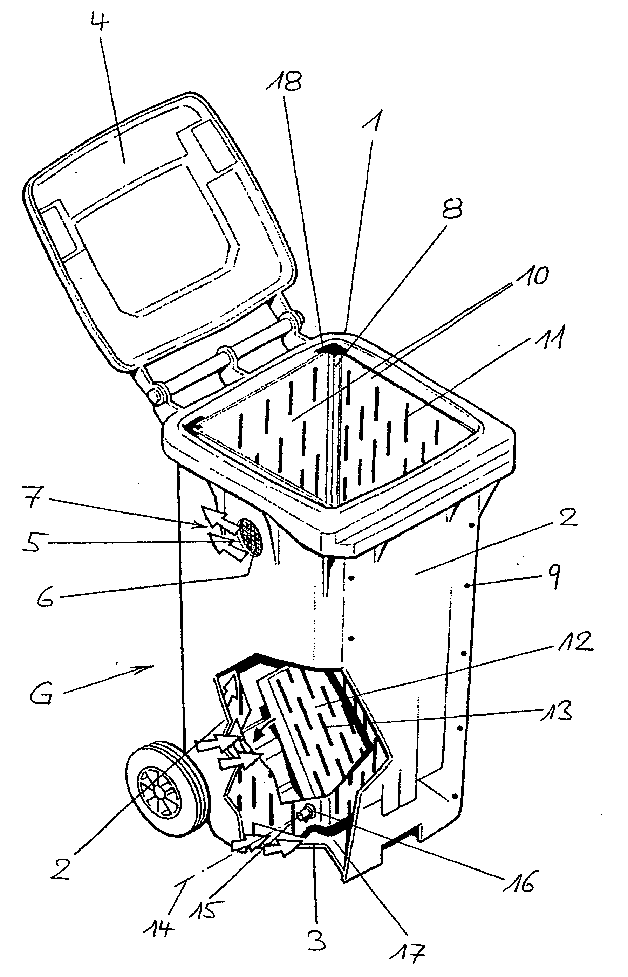

Die Zeichnung zeigt in perspektivischer Ansicht einen Sammelbehälter gemäß der vorliegenden Erfindung, der durch Umrüstung aus einer als Gefäß G eingesetzten herkömmlichen rollbaren Abfalltonne hervorgegangen ist. Die Tonne 1 umfaßt vier Seitenwände 2, einen Boden 3 und einen hochklappbar gelagerten Deckel 4. Insoweit entspricht die Tonne 1 dem hinlänglich bekannten, weit verbreiteten Stand der Technik, so daß es weiterer Erläuterungen nicht bedarf.

In zwei einander gegenüberliegende Seitenwände 2 der Tonne 1 sind Aussparungen 5 eingebracht. Diese sind mit einem Fliegengitter 6 gegen das Eindringen von Ungeziefer in das Innere der Tonne 1 gesichert. Die Aussparungen 5 bilden Luftdurchtrittsöffnungen 7.

An die Innenflächen der Seitenwände 2 sind vier Befestigungsschienen 8 angeschraubt, und zwar mittels der die betreffende Seitenwand 2 der Tonne 1 durchdringenden Schrauben 9. In die Befestigungsschienen 8 sind vier Seitenroste 10 eingesetzt, wobei die Seitenroste 10 einen Abstand von etwa 10 bis 20 mm zu der jeweils zugeordneten Seitenwand 2 einhalten. Die Seitenroste 10 weisen eine Perforation in Form von vertikalen Schlitzen 11 auf.

Ein Bodenrost 12, der ebenfalls eine Perforation in Form von Schlitzen 13 aufweist, ist um eine horizontale Achse 14 schwenkbar gelagert. Hierzu sind zwei mit dem Bodenrost 12 verbundene Achsstummel 15 drehbar in Lagern 16 aufgenommen, welche in zwei einander gegenüberliegenden Seitenrosten 10 vorgesehen sind. Wird die Tonne zu ihrer Entleerung auf den Kopf gestellt, so klappt der Bodenrost 12 in das Innere der Tonne hinein. Auf diese Weise können Biowertstoffe, die durch den Bodenrost 12 hindurch in den unter diesem angeordneten Sickerwasserspeicher 17 gelangt sind, problemlos entleert werden. Die Seitenroste 10 sind im übrigen mittels der oben auf die Befestigungsschienen 8 aufgesetzten Halteplatten 18 gegen Herausfallen gesichert.

## Patentansprüche

1. Sammelbehälter für die Erfassung von Biowertstoffen, umfassend
- ein Gefäß (G) mit einem Boden (3), Seitenwänden (2), einem öffenbaren Deckel (4) und zumindest einer Luftdurchtrittsöffnung (7),
- zwei im Inneren des Gefäßes (G) angeordnete, einander gegenüberliegende Seitenroste (10), die mit Abstand zu den benachbarten Seitenwänden (2) des Gefäßes (G) angeordnet sind, und
- einen Bodenrost (12), der mit Abstand zu dem Boden (3) des Gefäßes (G) angeordnet ist,
wobei die zwischen den Seitenrosten (10) und den jeweiligen benachbarten Seitenwänden (2) bestehenden Zwischenräume mit der mindestens einen Luftdurchtrittsöffnung (7) in Verbindung stehen und der Bodenrost (12) schwenkbar an den beiden einander gegenüberliegenden Seitenrosten (10) gelagert ist.

2. Sammelbehälter nach Anspruch 1,
**dadurch gekennzeichnet,**
**daß** mindestens eine Seitenwand (2) des Gefäßes (G) eine Luftdurchtrittsöffnung (7) aufweist.

3. Sammelbehälter nach Anspruch 2,
**dadurch gekennzeichnet,**
**daß** die Luftdurchtrittsöffnung (7) als Ausnehmung (5) der Seitenwand (2), in die ein Insektenfilter (6) eingesetzt ist, ausgebildet ist.

4. Sammelbehälter nach einem der Ansprüche 1 bis 3,
**dadurch gekennzeichnet,**
**daß** zwei einander gegenüberliegende Seitenwände (2) des Gefäßes (G) Luftdurchtrittsöffnungen (7) aufweisen.

5. Sammelbehälter nach einem der Ansprüche 1 bis 4,
**dadurch gekennzeichnet,**
**daß** die Seitenroste (10) Teil eines Einsatzes sind, der in eine das Gefäß (G) bildende handelsübliche Tonne (1) eingebaut ist.

6. Sammelbehälter nach Anspruch 5,
**dadurch gekennzeichnet,**
**daß** die Seitenroste (10) über Befestigungselemente (8), die innen an den Seitenwänden (2) der Tonne (1) angebracht sind, gehalten sind.

7. Sammelbehälter nach einem der Ansprüche 5 oder 6,
**dadurch gekennzeichnet,**
**daß** die Perforation der Seitenroste (10) vertikale Schlitze (11) umfaßt.

8. Sammelbehälter nach Anspruch 1,
**dadurch gekennzeichnet,**
**daß** an den unter dem Bodenrost (12) angeordneten Sickerwasserspeicher (17) ein Ablauf angeschlossen ist.

9. Sammelbehälter nach einem der Ansprüche 1 bis 8,
**dadurch gekennzeichnet,**
**daß** vier Seitenroste (10) vorgesehen sind.

10. Sammelbehälter nach einem der Ansprüche 1 bis 8,
**dadurch gekennzeichnet,**
**daß** genau zwei Seitenroste (10) vorgesehen sind.

11. Einsatz zum Umrüsten einer handelsüblichen Abfalltonne (1) in einen Sammelbehälter nach Anspruch 1, umfassend mindestens zwei Seitenroste (10), einen Bodenrost (12) und Befestigungselemente (8), die zur Montage der Seitenroste (10) an den Innenflächen der Seitenwände (2) der Abfalltonne (1) vorbereitet sind, wobei der Bodenrost (12) an den Seitenrosten (10) schwenkbar gelagert ist.

## Claims

1. Bin for collecting valuable biological materials, comprising
- container (G) with a floor (3), side walls (2), an openable lid (4) and at least one aeration opening (7),
- two side grates (10) arranged within the container (G) opposite to each other and arranged at a space to the adjoining side walls (2) of the container (G), and a bottom grate (12) arranged at a space to the floor (3) of the container (G), whereby the spaces provided between the side grates (10) and the respective adjoining side walls (2) communicate with at least one aeration opening (7), and the bottom grate (12) is hinged at the two side grates (10) arranged opposite to each other.

2. Bin according to claim 1, **characterised in that** at least one side wall (2) of the container (G) has an aeration opening (7).

3. Bin according to claim 2, **characterised in that** the aeration opening (7) is in the form of a hole (5) in the side wall (2) into which an insect filter (6) is inserted.

4. Bin according to one of the claims 1 to 3, **characterised in that** two side walls (2) of the container (G), arranged opposite to each other, have aeration openings.

5. Bin according to one of the claims 1 to 4, **characterised in that** the side grates (10) are part of an insert which is installed in a commercial refuse bin (1) forming the container (G).

6. Bin according to claim 5, **characterised in that** the side grates (10) are held by means of fixing elements (8) attached to the side walls (2) of the refuse bin (1).

7. Bin according to one of the claims 5 or 6, **characterised in that** the perforations in the side grates (10) include vertical slots (11).

8. Bin according to claim 1, **characterised in that** an outlet is connected to the drainage water reservoir (17) arranged below the bottom grate (12).

9. Bin according to one of the claims 1 to 8, **characterised in that** four side grates (10) are provided.

10. Bin according to one of the claims 1 to 8, **characterised in that** exactly two side grates (10) are provided.

11. An insert for converting a commercial refuse bin (1) into a bin according to claim 1 comprising at least two side grates (10), one bottom grate (12) and fixing elements (8) prepared for installing the side grates (10) at the inside faces of the side walls (2) of the refuse bin (1), whereby the bottom grate (12) is hinged at the side grates (10).

## Revendications

1. Récipient de collecte destiné à recevoir des matières biologiques valorisables, comprenant
- une cuve (G) comportant un fond (3), des parois latérales (2), un couvercle (4) ouvrant et au moins une ouverture de passage d'air (7),
- deux grilles latérales (10) disposées mutuellement en vis-à-vis à l'intérieur de la cuve (G), qui sont disposées à distance des parois latérales (2) voisines de la cuve (G),
- et une grille de fond (12), qui est disposée à distance du fond (3) de la cuve (G),
les espaces intermédiaires entre les grilles latérales (10) et les parois latérales (2) concernées communiquant avec l'ouverture de passage d'air (7), au nombre d'au moins une, et la grille de fond (12) étant montée pivotante sur les deux grilles latérales (10) disposées mutuellement en vis-à-vis.

2. Récipient de collecte selon la revendication 1, **caractérisé en ce qu'**au moins une paroi latérale (2) de la cuve (G) est pourvue d'une ouverture de passage d'air (7).

3. Récipient de collecte selon la revendication 2, **caractérisé en ce que** l'ouverture de passage d'air (7) est conformée en évidement (5) dans la paroi latérale (2), dans lequel est inséré un filtre à insectes (6).

4. Récipient de collecte selon une des revendications 1 à 3, **caractérisé en ce que** deux parois latérales (2) mutuellement en vis-à-vis de la cuve (G) sont pourvues d'ouvertures de passage d'air (7).

5. Récipient de collecte selon une des revendications 1 à 4, **caractérisé en ce que** les grilles latérales (10) font partie d'une garniture mise en place dans un conteneur (1) du commerce formant la cuve (G).

6. Récipient de collecte selon la revendication 5, **caractérisé en ce que** les grilles latérales (10) sont tenues par des éléments de fixation (8), montés côté intérieur sur les parois latérales (2) du conteneur (1).

7. Récipient de collecte selon une des revendications 5 ou 6, **caractérisé en ce que** la perforation des grilles latérales (10) comprend des fentes (11) verticales.

8. Récipient de collecte selon la revendications 1, **caractérisé en ce qu'**un écoulement est connecté à la cuve à eau d'égouttage (17) disposée sous la grille de fond (12).

9. Récipient de collecte selon une des revendications 1 à 8, **caractérisé en ce qu'**il est prévu quatre grilles latérales (10).

10. Récipient de collecte selon une des revendications 1 à 8, **caractérisé en ce qu'**il est prévu exactement deux grilles latérales (10).

11. Garniture pour transformer un conteneur à déchets (1) du commerce en un récipient de collecte selon la revendication 1, comprenant au moins deux grilles latérales (10), une grille de fond (12) et des éléments de fixation (8), qui sont prévus pour le montage des grilles latérales (10) sur les faces intérieures des parois latérales (2) du conteneur à déchets (1), la grille de fond (12) étant montée pivotante sur les grilles latérales (10).
